# EUROPEAN PATENT APPLICATION

(11) **EP 1 079 564 A1**
(43) Date of publication of application: **28.02.2001**
(21) Application number: 99440239.4
(22) Date of filing: 27.08.1999
(51) Int. Cl.: H04L 1/00, H04L 29/06

(54) **A method for transmitting a payload to a receiver along with check bits, transmitter and receiver carrying out this method**

(71) Applicant: ALCATEL, 75008 Paris (FR)
(72) Inventor: Fratti, Marco, 78100 St. Germain en Laye (FR); Martin, Béatrice, 75005 Paris (FR)
(74) Representative: Scheer, Luc

(57) **Abstract**

The present invention proposes notably a method for transmitting a payload to a receiver along with check bits.

According to the invention, check bits that do not correspond to the payload are sent to the receiver if an error has occurred in generating this payload.

## Description

The present invention relates to the transmission of digital data organized in frames between a transmitter and a receiver, each frame comprising a payload and check bits. In the following, the check bits are also sometimes called CRC (Cyclic Redundancy Check) bits.

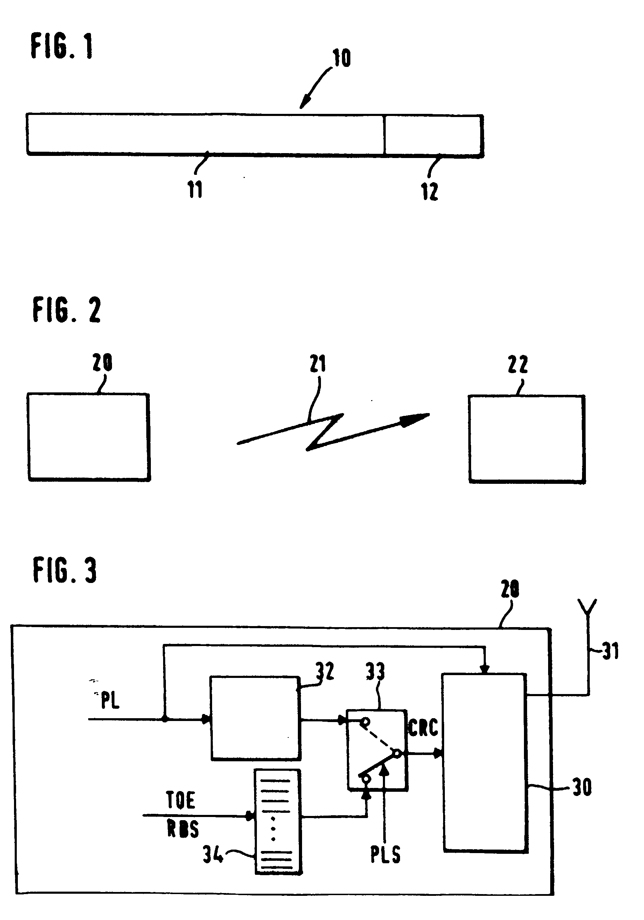

Figure 1 represents the structure of a frame comprising a payload and check bits and figure 2 represents a transmitter and a receiver of such a frame.

The frame 10 of figure 1 comprises a payload 11 and check bits 12. The payload 11 contains "useful" bits to be transmitted from a transmitter 20 to a receiver 22 through a transmission channel 21 and the check bits 12 are intended to check the integrity of the payload received by the receiver 22. More precisely, the check bits 12 are calculated in the transmitter 20 on the bits of the payload, e.g. a checksum is calculated. The check bits are then transmitted with the payload and the receiver 22 checks if the check bits correspond to the received payload. If the check bits correspond to the received payload, the payload is considered to have been received without error. If the check bits do not correspond to the received payload, the receiver 22 considers that a transmission error has occurred and the frame is processed accordingly (e.g. deleted).

However, in wireless systems especially, the transmission channel 21 is not the only error source for the received data: It may happen that error conditions appear at the transmitter side. As an example, a malfunctioning in the communication among different layers of the transmitter can generate an inconsistent payload. If such payload is transmitted and, even if received correctly (i.e. without transmission error), it contains useless information. Since the check bits do not show that the payload is inconsistent, the receiver is induced in error.

A solution to prevent inducing the receiver in error would be to not transmit the payload when it is known, at the level of the transmitter, that this payload contains errors. However, this is not desirable in systems where it is wished to have continuous communications (without interruptions) between the transmitter and the receiver, e.g. for avoiding transient states.

In the prior art concerning wireless communications, the different error sources are handled in a separate way at each concerned layer of the receiver side:
- The physical layer (L1) receiver can detect an error condition due to propagation channel impairments only: by using the CRC check, the frames are classified as 'good' or 'bad'. The physical layer receiver has no mean to detect an error condition due to data inconsistency generated at the transmitter side. Therefore, in this case, no 'error concealment' procedures can be activated;
- Data inconsistency generated at the transmitter side is only handled at the L2 (i.e. MAC (Medium Access Control), RLC (Radio Link Control)) and upper layers, as L3, by means of proper procedures for dealing with unknown, unforeseen and erroneous protocol data.

Thus, in the prior art, error conditions at L2 layers (i.e. not related to channel conditions) are not taken into account by the L1 error concealment procedures.

The objective of the present invention is to propose a robust fall-back procedure that guarantees a minimum impact of any error condition on the Quality-of-Service (QoS). In particular, it is desirable that the physical layer (i.e. the air interface for a wireless system) of the receiver has the possibility to discriminate among different possible error conditions, the latter being not due to transmission errors.

This objective is achieved with a transmitter for transmitting a payload to a receiver along with check bits, said transmitter comprising means for sending check bits that do not correspond to the payload if an error has occurred while generating the payload.

Preferably, the check bits that do not correspond to the payload constitute indications on the error that has occurred during the generation of the payload.

In a preferred embodiment, the check bits are calculated from reference bit sequences.

The invention also concerns a method for transmitting a payload to a receiver along with check bits, this method consisting in sending check bits that do not correspond to the payload if an error has occurred in generating the payload.

The invention also concerns a receiver for receiving payloads along with check bits, this receiver comprising interpreting means for interpreting the significance of the occurrence of check bits that do not correspond to the corresponding payload.

The interpreting means preferably comprise comparison means for comparing the received check bits with different sets of stored check bits, each set corresponding to an error that could occur within the transmitter of the check bits.

The comparison means preferably co-operate with decision means, these decision means taking a decision on the basis of the number of times that a given error has occurred or on the type of error that has occurred.

In the following, the invention will be described in greater detail with reference to the accompanying drawings, in which:
- Figure 1 represents the structure of a frame comprising a payload and check bits;
- Figure 2 represents a transmitter and a receiver communicating on a transmission channel;
- Figure 3 represents a preferred embodiment of a transmitter according to the present invention;
- Figure 4 represents a preferred embodiment of a receiver according to the present invention;
- Figure 5A is a flow chart showing the method according to the present invention applied to the transmitter side;
- Figure 5B is a flow chart showing the method according to the present invention applied to the receiver side.

Figures 1 and 2 have been presented in relation to the prior art.

Figure 3 represents a preferred embodiment of a transmitter according to the present invention.

The transmitter 20 of figure 3 is intended to transmit a payload to a receiver along with check bits. Sending means 30 are therefore provided, these sending means 30 receiving the payload PL to be sent and check bits CRC that are attached to this payload PL, for example like shown in figure 1. The sending means 30 are for example coupled to an antenna 31 (for a wireless application).

Like commonly known from the prior art, the payload PL received from upper layers, e.g. from MAC layer, is applied to a device 32 calculating the CRC (check bits) corresponding to this payload PL. In addition to this, the calculated CRC is, according to the invention, applied to a selection device 33, represented by a switch.

In normal operation, i.e. when the payload generated by the upper layers does not comprise errors, the switch 33 is in the position represented with a dotted line, it means that the CRC calculated by the device 32 is applied to the sending means 30.

In abnormal operation, i.e. when the payload generated by the upper layers comprises an error, the switch 33 is in the position represented with a continuous line, it means that the check bits that will be sent along with the payload PL do not correspond to the payload PL if an error has occurred while generating this payload PL. In this respect, the upper layers provide a payload status signal (PLS) indicating whether the current payload possibly comprises an error or not.

The check bits that are sent in the case of a mistake during the generation of the payload are, in a first embodiment, equal to a single reference word (e.g. only constituted of 0 or 1 levels).

In a second embodiment, the check bits that are calculated in the device 32 are modified (e.g. rotated or complemented) such that they do no more correspond to the transmitted payload.

In a third preferred embodiment, represented in figure 3, the check bits that are sent with the payload are extracted from a look-up table 34 indexed by a type of error (TOE) signal generated at a higher layer. The TOE signal is representative of the type of error that has occurred while generating the payload PL (segmentation of the payloads, generation of special requests (ARQ,...), protection of data,...). Thus, for each given type of error, corresponding check bits are sent to the receiver. This allows the receiver to know what type of error has occurred in the transmitter and to take corresponding arrangements.

In a fourth embodiment, complementary to the third one, the sent check bits are calculated from reference bit sequences (RBS). This means that, instead of indicating to the look-up table 34 the type of error TOE that has occurred while generating the payload PL (e.g. error No.1, error No.2,...), a reference bit sequence corresponding to the type of error is applied to the look-up table 34. Each of the reference bit sequences has the same length than the payload and the look-up table 34 can then be compared to a CRC generator, identical to the device 32. The advantage of this embodiment will be explained in the following.

To summarize, a transmitter according to the invention comprises means 33, 34 for sending check bits that do not correspond to the payload if an error has occurred while generating this payload.

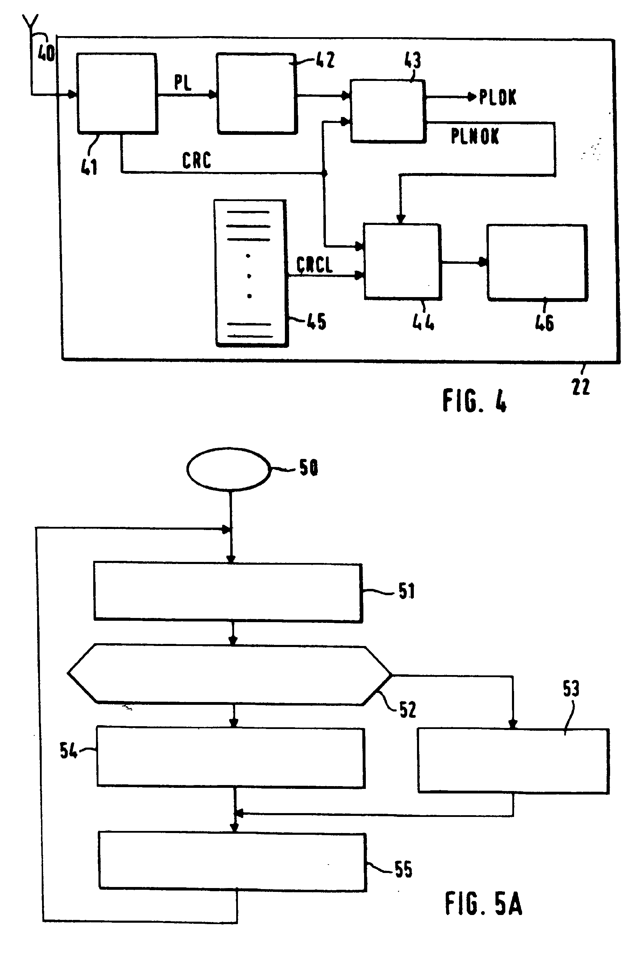

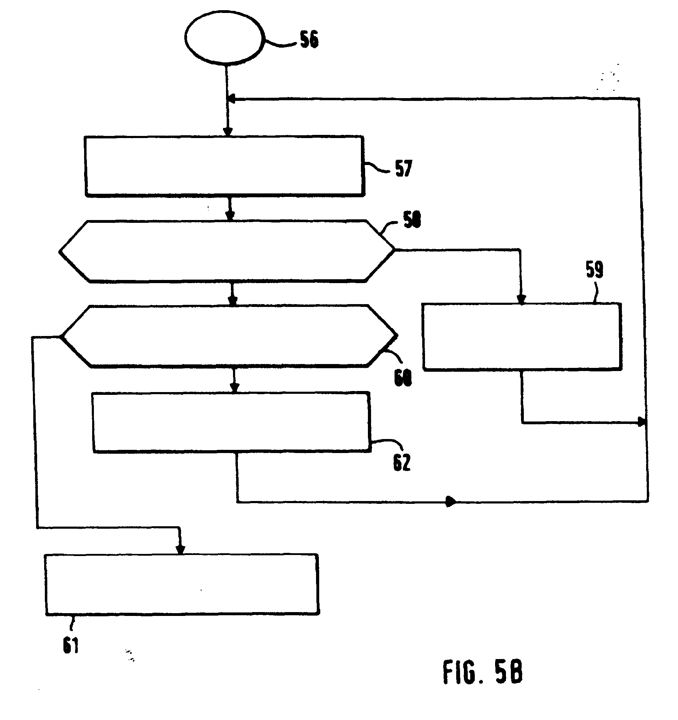

Figure 4 represents a preferred embodiment of a receiver according to the present invention. For simplicity reasons, the signals PL and CRC have the same references than in the transmitter of figure 3, but these signals are received signals and not sent signals.

The receiver, referenced 22, comprises here an antenna 40 for receiving the frames sent by the transmitter of figure 3. The received frames are applied to a check bits extractor 41 providing the received payload PL on one path and its corresponding check bits CRC one another path. The received payload PL is applied to a check bits generator 42 identical to the one used on the transmitter side (referenced 32), in order to generate check bits that are compared with the received check bits CRC. The comparison occurs in comparison means 43.

The comparison means 43 provide a "payload received without error" information (PLOK - for "payload is okay") if the check bits provided from the check bits generator 42 are identical to the check bits issued from the extractor 41. This corresponds to the reception of a frame for which the generation of the payload did not show the occurrence of an error and for which no transmission error has occurred. The receiver then proceeds according to the prior art systems (normal treatment of the received payload).

On the other hand, the comparison means 43 provide a "payload received with error" information (PLNOK - "for payload is not okay") if the check bits provided from the check bits generator 42 are not identical to the check bits issued from the extractor 41. This corresponds to the reception of a frame for which the generation of the payload has shown the occurrence of an error or for which a transmission error has occurred.

According to the invention, the receiver comprises means 44, 45, 46 for interpreting the significance of the occurrence of check bits that do not correspond to the corresponding payload.

More precisely, the information PLNOK is used for enabling the comparison, in comparison means 44, between the received CRC and a CRC generated locally, the latter being referenced CRCL (for "CRC Local").

CRCL is intended to be compared with the received CRC for detecting the occurrence of an error in the generation of the payload at the level of the transmitter:

For the first embodiment described above (the sent CRC is equal to a single reference word), CRCL has also the same single value. If the comparison means 44 detect that the received CRC is identical to this single value, it is clear for the receiver that the received payload has been erroneously generated at the transmitter side and decision means 46 decide which arrangement has to be undertaken. The decision consists for example in doing nothing, release the communication, wait on another erroneous frame (counting of the occurrence of errors until a predetermined error occurrence number is reached),... The decision means 46 can take a decision on the basis of the number of times that this error has occurred.

For the second embodiment described above (modification of the calculated check bits before transmission), the receiver can only detect that the received CRC does not correspond to the received payload. CRCL is in this case preferably fixed or generated from the received CRC so that the comparison means 44 outputs an error signal and the decision means 46 handle the occurrence of this error message like above.

For the third and fourth embodiments described above (the check bits are representative of the type of error or calculated from reference bit sequences RBS), a look-up table 45 containing the same data than the look-up table 34 of figure 3 is addressed and the different possible types of error are compared with the received CRC until one type of error is recognized. When an error type is recognized, the receiver is aware of what happened at the transmitter side. Then, the decision means 46 operate according to this detected type of error. If the detected error corresponds to a serious error, the communication can for example be released. For minor errors, the decision means 46 can for example count the occurrence of the same errors and wait until the same error has occurred a predetermined number of times before taking a decision.

The RBSs are chosen such that they have the maximal probability to be different from the all possible payloads to be transmitted. This permits to lower the false detection probability, i.e. the fact to decide that a received frame indicates an error at the transmitter side when in fact there was no error. The longer the length of the payload, the smaller the false detection probability.

Indeed, the proposed invention is not directed to handle transmission errors, i.e. if the received CRC does not correspond to a known CRCL, it is considered that the error is due to the transmission channel and prior art dispositions are undertaken.

The main advantage of the invention is that both the L1 transmitter and the L1 receiver can be notified about the same error conditions that occurred independently of the propagation channel. This way, by adopting the same error concealment procedures, the L1 source encoder (at the transmitter side) and the L1 source decoder (at the reception side) can remain 'locked', with a positive impact on the quality of service. Another advantage is that the communication link can be maintained anyway.

Figure 5A is a flow chart showing the method according to the present invention applied to the transmitter side.

After a start step 50, the payload is applied to the L1 stage of the transmitter at step 51. At step 52, it is checked if the payload contains an error due to a malfunctioning in an upper layer. If the payload contains probably an error (an error has occurred in generating said payload - PLS of fig.3 is representative of an error - step 53), check bits that do not correspond to this payload are attached to the payload. Otherwise (step 54), the payload does not contain erroneous bits, its CRC is calculated and attached to it. At step 55, the frame constituted from the payload and the attached check bits is sent to the receiver and the next payload is analyzed (step 51).

Figure 5B is a flow chart showing the method according to the present invention applied to the receiver side.

Step 56 is a start step. At step 57, the receiver receives the transmitted frame. At step 58, it is checked if the check bits correspond to the information contained in the payload. If yes, the payload is processed (step 59) and it is waited on the next frame (step 57). If no, it has to be checked if the reception of erroneous check bits is or not indicative of the occurrence of an error while generating the payload. Therefore, at step 60, it is verified if the received check bits are known to the receiver. If not, a transmission error is possible (detection of a bad received frame at step 62) and it is waited on the next frame (step 57). If yes, the receiver knows at least that an error has occurred during the generation of the payload. This information is exploited (step 61) thereafter.

The proposed method is especially applicable to any wireless communication system, e.g. in cellular CDMA (Code Division Multiple Access) networks, and in particular to any communication system that implements modular layers and related protocols (example: OSI).

The invention is not limited to systems where different layers (e.g. layers 2 and 3) are involved in the generation of a payload at the level of the transmitter. The important point is that some devices that are involved in the preparation of the payload can make errors that result in an erroneous payload.

Even though the invention is described above with reference to the accompanying drawings, it is clear that the invention is not limited thereto, but it can be varied in many ways within the inventive idea disclosed in the appended claims.

## Claims

1. A transmitter (20) for transmitting a payload (PL) to a receiver (22) along with check bits (CRC), wherein said transmitter (20) comprises means (33, 34) for sending check bits that do not correspond to said payload (PL) if an error has occurred while generating said payload (PL).

2. A transmitter according to claim 1, wherein said check bits that do not correspond to said payload (PL) constitute indications on said error occurred during said generation of said payload (PL).

3. A transmitter according to any one of claims 1 or 2, wherein said check bits are calculated from reference bit sequences (RBS).

4. A method for transmitting a payload (PL) to a receiver (22) along with check bits, wherein said method consists in sending check bits that do not correspond to said payload (PL) if an error has occurred in generating said payload (PL).

5. A method according to claim 4, wherein said check bits that do not correspond to said payload (PL) constitute indications on said error occurred during said generation of said payload (PL).

6. A method according to any one of claims 4 or 5, wherein said check bits are calculated from reference bit sequences (RBS).

7. A receiver (22) for receiving payloads (PL) along with check bits, said receiver (22) comprising interpreting means (44, 45, 46) for interpreting the significance of the occurrence of check bits that do not correspond to the corresponding payload (PL).

8. A receiver according to claim 7, wherein said interpreting means (44, 45, 46) comprise comparison means (44) for comparing the received check bits with different sets of stored check bits (CRCL), each set corresponding to an error that could occur within the transmitter (20) of said check bits.

9. A receiver according to any one of claims 7 or 8, wherein said comparison means (44) co-operate with decision means (46), said decision means (46) taking a decision on the basis of the number of times that a given error has occurred or on the type of error that has occurred.
